(19) Europäisches Patentamt
European Patent Office
Office européen des brevets

(11) **EP 1 630 923 B1**

(12) **EUROPÄISCHE PATENTSCHRIFT**

(45) Veröffentlichungstag und Bekanntmachung des Hinweises auf die Patenterteilung:
**17.10.2007  Patentblatt 2007/42**

(51) Int Cl.:
*H02H 3/02* *(2006.01)*    *B60H 1/00* *(2006.01)*

(21) Anmeldenummer: **04020685.6**

(22) Anmeldetag: **31.08.2004**

(54) **Steuerschaltung für eine Mehrzahl elektrischer Verbraucher mit einer Absicherung für Halbleiterschalter**

Control circuit for a plurality of electrical loads with a safeguard for the semiconductor switches

Circuit de contrôle pour une pluralité de charges électriques avec une sécurité pour les commutateurs à semi-conducteur

(84) Benannte Vertragsstaaten:
**DE ES FR GB IT**

(43) Veröffentlichungstag der Anmeldung:
**01.03.2006  Patentblatt 2006/09**

(73) Patentinhaber: **Catem GmbH & Co. KG**
**76863 Herxheim bei Landau (DE)**

(72) Erfinder:
• **Bohlender, Franz**
**67870 Kandel (DE)**

• **Uhl, Günter, Dr.-Ing.**
**74921 Helmstadt-Bargen (DE)**

(74) Vertreter: **Grünecker, Kinkeldey,**
**Stockmair & Schwanhäusser**
**Anwaltssozietät**
**Maximilianstrasse 58**
**80538 München (DE)**

(56) Entgegenhaltungen:
**EP-A- 1 157 869      GB-A- 2 396 982**
**US-A- 4 626 952      US-A1- 2002 167 227**

EP 1 630 923 B1

**Beschreibung**

Die Erfindung betrifft eine elektrische Steuerschaltung für eine Mehrzahl elektrischer Verbraucher mit erhöhter Sicherheit gegen Ausfall eines in der Steuerschaltung angeordneten Halbleiterschalters, insbesondere für den Einsatz in Kraftfahrzeugen.

Halbleiterschalter werden heutzutage in Kraftfahrzeugbordnetzen in großen Stückzahlen und in einer Vielzahl von Anwendungen zum Ein- und Ausschalten von Verbrauchern und auch zum Steuern des Stromflusses durch den Verbraucher eingesetzt. Dabei werden teilweise Ströme bis zu über 50 Ampere geschaltet. Bei einer elektrischen Zusatzheizung als zu steuernder Verbraucher mit einer Heizleistung von beispielsweise 1.600 Watt, die auf vier Stromkreise aufgeteilt ist, kann die Leistungsaufnahme durch Pulsbreitenmodulation (PWM) stufenlos zwischen 0 % und 100 % eingestellt werden. Jeder Stromkreis wird durch einen Halbleiterschalter (vorzugsweise einen MOSFET) periodisch ein- und ausgeschaltet. Dabei fließen durch jeden Halbleiterschalter Ströme von bis zu 50 Ampere.

Im Gegensatz zu mechanischen Schaltern wie Relais sind Halbleiterschalter jedoch empfindlich gegen Überlastung. Im Überlastungsfall (EOS - electrical overstress) kann es zu einem "Durchlegieren" des Halbleiterschalters kommen. Der Halbleiterschalter ist dann dauerhaft leitend und nicht mehr abschaltbar.

Der leitende Zustand eines Halbleiterschalters ist undefiniert, der Durchlasswiderstand des Schalters in diesem Zustand kann so um ein Mehrfaches höher als der Normalzustand sein. Durch den erhöhten Durchlasswiderstand vergrößert sich der Spannungsabfall in dem Halbleiterbauelement und die umgesetzte Verlustleistung wächst entsprechend an. Die übermäßige Erwärmung des Halbleiterbauteils führt zu einer thermischen Überlastung, die die gesamte Steuerelektronik mit der Folge von Verschmorungen in Mitleidenschaft zieht und auch eine Zerstörung vom Komponenten zur Folge haben kann, die im Umfeld der Heizvorrichtung angeordnet sind.

Halbleiterschalter zum Schalten hoher Ströme werden heutzutage in Millionenstückzahlen in Kraftfahrzeugen eingebaut. Die Gefahr, dass es trotz der hohen Zuverlässigkeiten von Halbleiterbauelementen mit Ausfallraten im ppm-Bereich zu Schäden am Kraftfahrzeug kommt, ist nicht vernachlässigbar. Zu diesem Zweck sind Sicherungen erforderlich, die im Falle eines dauernd leitenden Halbleiterbauelementes den Stromfluss zuverlässig unterbrechen. Diese Anforderung gilt insbesondere für Anwendungen, bei denen das Halbleiterbauelement und die von diesem gesteuerte Last ständig mit der Fahrzeugbatterie verbunden ist, insbesondere so genannten "Klemme-30-Applikationen". Bei diesen Anwendungen ist auch bei abgestelltem Fahrzeug, d.h. Zündung AUS, eine elektrische Verbindung zwischen der Batterie und der Anwendung vorhanden.

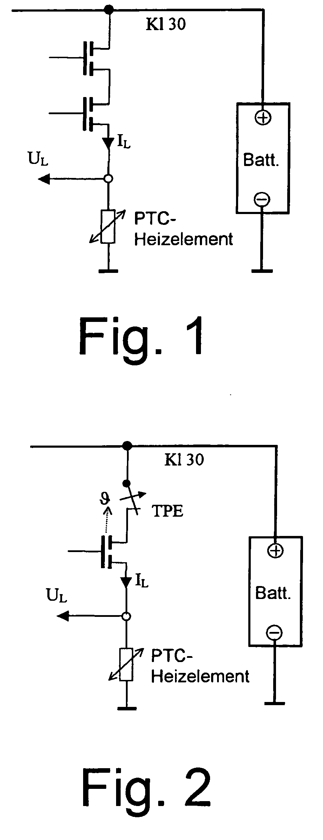

Gemäß einem herkömmlichen Ansatz zur Erhöhung der Sicherheit gegen den Ausfall eines Leistungshalbleiters werden zwei Halbleiterschalter in Reihe geschaltet. Ein Beispiel für eine entsprechende Schaltung ist in Fig. 1 dargestellt. Der Strom $I_L$ durch den Lastkreis kann erst dann fließen, wenn beide Leistungshalbleiter eingeschaltet sind. Eine Schutzfunktion wird damit auch bei abgestelltem Fahrzeug erreicht, da in diesem Fall beide Leistungshalbleiter automatisch nicht-leitend geschaltet sind.

Nachteilig an dieser herkömmlichen Absicherung eines Halbleiterschalters ist, dass immer zwei Halbleiterbauelemente von dem Laststrom durchflossen sind und eine entsprechende Verlustleistung erzeugen. Beide Halbleiterschalter müssen zur Wärmeabfuhr an ein Kühlelement angebunden werden, so dass der Hardwareaufwand und auch der Platzbedarf deutlich ansteigen. Zusätzlich müssen in der Regel teurere Halbleiterbausteine verwendet werden, um die zusätzlich entstehende Verlustleistung zu vermindern.

Eine weitere herkömmliche Alternative zur Absicherung des Ausfalls eines Leistungshalbleiters ist in Fig. 2 gezeigt. Ein thermisches Schutzelement TPE ist in Reihe mit dem Leistungshalbleiter geschaltet. Durch eine thermische Kopplung löst das thermische Schutzelement, beispielsweise eine Schmelzsicherung, bei einer Überhitzung des Halbleiterschalters aus und trennt den Strompfad zum Halbleiterschalter dauerhaft auf.

Nachteilig an einem solchen thermischen Schutzelement ist der erforderliche Bauraum im Bereich des zu schützenden Leistungshalbleiters. Außerdem ist zum Auslösen eines solchen thermischen Schutzelementes eine hohe Temperatur im Bereich von mindestens 200°C am Halbleiterbauelement erforderlich. Da bei der Verwendung von effizienten Kühlkörpern zur Abfuhr der Verlustleistung von dem Halbleiterbauelement solche Temperaturen auch im Fehlerfall nicht immer erreicht werden, ist eine zuverlässige Abschaltung nicht garantiert.

Eine zweistufige Sicherheitsschaltung, die auf hohe Temperaturen anspricht, ist in GB-2 396 982 gemäß dem Oberbegriff des Anspruchs 1 beschrieben. In einer ersten Stufe löst ein Temperatursensor das Abfallen von Relais aus, während in einer zweiten Stufe eine dauerhafte Stromunterbrechung durch eine Kurzschlusssicherung erfolgt. Diese zweite Stufe löst aus, wenn die erste Stufe nicht nach einer bestimmten Zeit zum Absenken der Temperatur in den Normalbereich führt.

Aufgabe der Erfindung ist es, eine elektrische Steuerschaltung und ein Verfahren zum Steuern einer Mehrzahl elektrischer Verbraucher anzugeben, die das Risiko, das von einem Transistorausfall ausgeht, vermindern.

Diese Aufgabe wird mit den Merkmalen der unabhängigen Patentansprüche 1 und 14 gelöst.

Es ist der besondere Ansatz der vorliegenden Erfindung, die Sicherheit von Halbleiterschaltern, insbesondere beim Einsatz in Kraftfahrzeugen, zu erhöhen.

Zu diesem Zweck wird erfindungsgemäß die Funktion der Leistungshalbleiter, die den Verbrauchern Strom zuführen, überwacht. Die Stromzuführungen zu der Mehrzahl von Leistungshalbleitern sind mit einem gemeinsamen Kurzschlussschalter verbunden. Wird einer der mit diesem Kurzschlussschalter verbundenen Leistungshalbleiter nicht zur Abgabe von Strom an den zugeordneten Verbraucher angesteuert und führt der Leistungshalbleiter dem Verbraucher dennoch Strom zu, so wird der Kurzschlussschalter aktiviert und die Stromzuführung zu allen mit dem Kurzschlussschalter verbundenen Leistungshalbleitern unterbrochen.

Auf diese Weise wird sowohl der defekte Leistungshalbleiter als auch der mit diesem verbundene Verbraucher bei Ausfall eines Leistungshalbleiters zuverlässig von der Stromzufuhr getrennt. Damit kann bei einem Ausfall des Leistungshalbleiters ein Folgeschaden wirksam verhindert werden, da weder eine Überhitzung des Leistungshalbleiters noch des Verbrauchers stattfinden kann. Somit wird die Sicherheit beim Einsatz von Leistungshalbleitern zum Schalten von Strom in Kraftfahrzeugen deutlich erhöht.

Dadurch dass eine Mehrzahl von Leistungshalbleitern über einen gemeinsamen Kurzschlussschalter bei Ausfall eines der mit dem Kurzschlussschalter verbundenen Leistungshalbleiter abgeschaltet wird, kann die zusätzliche Sicherheit mit geringst möglichem zusätzlichen Hardwareaufwand und Platzbedarf erreicht werden.

Vorzugsweise ist die Stromüberwachungsfunktion in den Leistungshalbleiter integriert. Durch die Verwendung von "intelligenten" Transistoren, die als Zusatzfunktion eine Strommessung bzw. Spannungsüberwachung des Lastkreises erlauben, kann eine Überwachung der Funktionalität des Leistungshalbleiters in besonders einfacher Weise realisiert werden.

Ein Unterbrecherelement ist vorzugsweise ein Leiterbahnabschnitt, dessen Querschnitt so dimensioniert ist, dass eine Unterbrechung bei einem vorgegebenen Stromwert erfolgt. Der Stromwert liegt vorzugsweise um einen festgelegten Betrag oberhalb des maximal den PTC-Heizelementen über die Leiterbahn zugeführten Stroms.

Vorzugsweise wird zur Überwachung der Funktionalität des Leistungshalbleiters die Spannung des Lastkreises überwacht. Damit kann auch bei Ausfall einer in den Leistungshalbleiter integrierten Strommessung eine sichere Überwachung erreicht werden.

Vorzugsweise werden von der Steuereinheit alle Leistungshalbleiter abgeschaltet, wenn eine Unterbrechung der Stromzufuhr zu einem der Leistungshalbleiter bewirkt werden soll. Damit wird garantiert, dass zur Unterbrechung ein maximaler Kurzschlussstrom zur Verfügung steht.

Die Unterbrechung über den Kurzschlussschalter erfolgt durch Ansteuerung des Kurzschlussschalters für eine vorgegebene Zeitdauer. Anschließend wird die erreichte Wirkung vorzugsweise noch einmal überprüft. Sollte dabei festgestellt werden, dass der betroffene Leistungshalbleiter immer noch Strom den PTC-Heizelementen zuführt, so kann die Ansteuerung des Kurzschlussschalters gegebenenfalls mehrfach wiederholt werden. Dadurch kann eine zuverlässige Abschaltung des ausgefallenen Leistungshalbleiters über die Leiterbahnsicherungen erreicht werden, auch wenn der Kurzschlussstrom aufgrund der Stromentnahme anderer Verbraucher zum Zeitpunkt des ersten erzeugten Kurzschlusses nicht zur Unterbrechung der Stromzuführung zu dem Leistungshalbleiter ausgereicht haben sollte.

Vorzugsweise wird als Kurzschlussschalter ein Relais oder ein Halbleiterschalter verwendet, insbesondere ein IGBT, d.h. ein Insulated Gate Bipolar Transistor.

Die einzelnen Stromzuführungen, die mit demselben Kurzschlussschalter verbunden sind, werden aufeinanderfolgend aufgetrennt. Damit ist sichergestellt, dass der Kurzschlussstrom jeweils zur Durchtrennung der jeweiligen Stromzuführung ausreichend ist. Auf diese Weise kann auch bei schwacher Batterie eines Kraftfahrzeugs eine sichere Abschaltung erreicht werden.

Vorzugsweise werden die Unterbrecherelemente schrittweise durchtrennt, und zwar ausgehend von dem Unterbrecherelement, das zu dem Kurzschlussschalter benachbart angeordnet ist. Mit jeder Durchtrennung einer Stromzuführung wird ein maximale Kurzschlussstrom der benachbarten, von dem Kurzschlussschalter jeweils weiter entfernten Stromzuführung zur Verfügung gestellt und damit schrittweise eine Durchtrennung aller Unterbrecherelemente der "sicherheitstechnisch gekoppelten" Leistungshalbleiter bewirkt.

Zwei benachbarte Stromzuführungen zu den Leistungshalbleitern sind über einen Quersteg miteinander verbunden. In dieser Art kann eine beliebige Anzahl von Stromzuführungen mit dem Kurzschlussschalter verbunden werden. Dazu verbindet der Quersteg vorzugsweise jeweils die Leitungsabschnitte der Stromzuführungen zwischen dem Unterbrecherelement und dem Leistungshalbleiter. Durch geeignete Dimensionierung des elektrischen Widerstandes des Querstegs lässt sich der im Kurzschlussfall an den einzelnen Stromzuführungen anliegende Kurzschlussstrom einstellen.

Die elektrischen Widerstände des Querstegs und der Unterbrecherelemente werden so ausgelegt, dass gleichzeitig jeweils nur durch ein Unterbrecherelement ein ausreichend hoher Kurzschlussstrom fließt. Damit lässt sich in einfacher Weise eine sichere, aufeinanderfolgende Abschaltung der Leistungshalbleiter, die mit einem Kurzschlussschalter verbunden sind, erreichen.

Weitere vorteilhafte Ausgestaltung der Erfindung sind Gegenstand der Unteransprüche.

Im Folgenden wird die Erfindung anhand der beiliegenden Zeichnungen beschrieben, in denen:

Fig. 1     die Schaltung einer herkömmlichen Absicherung eines Halbleiterschalters in einem Kraftfahrzeug durch Reihenschaltung von zwei Halbleiterschaltern zeigt,

Fig. 2 eine weitere Schaltung einer alternativen herkömmlichen Absicherung eines Halbleiterschalters in einem Kraftfahrzeug durch eine thermische Sicherung zeigt,

Fig. 3 schematisch den Aufbau des der erfindungsgemäßen Absicherung zugrundeliegenden Konzepts wiedergibt,

Fig. 4 ein Ablaufdiagramm des Verfahrens zum Betreiben der Absicherung gemäß Fig. 3 zeigt,

Fig. 5 eine beispielhafte Schaltung zur Absicherung eines Halbleiterschalters gemäß dem Aufbau aus Fig. 3 zeigt

Fig. 6 schematisch den Aufbau einer Leiterbahnsicherung für die Schaltung gemäß Fig. 7 zeigt,

Fig. 7 eine beispielhafte Schaltung für eine erfindungsgemäße gleichzeitige Absicherung einer Mehrzahl von Halbleiterschaltern zeigt,

Fig. 8 ein Beispiel für ein Leiterbahnlayout einer Leitbahnsicherung von zwei Leistungshalbleitern über einen gemeinsamen Kurzschlussschalter zeigt,

Fig. 9 eine elektrische Ersatzschaltung für die Leiterbahnstruktur der Fig. 8 zeigt,

Fig. 10a eine Seitenansicht einer elektrischen Heizvorrichtung mit Halbleiterschaltern zum Ansteuern einer Mehrzahl von Heizstufen zeigt,

Fig. 10b eine Aufsicht auf die elektrische Heizvorrichtung gemäß Fig. 10a zeigt,

Fig. 11 eine perspektivische Ansicht eines zu Fig. 10 alternativen Aufbaus einer elektrischen Heizvorrichtung zeigt,

Fig. 12 eine perspektivische Ansicht einer Steuerschaltung der in Fig. 11 gezeigten Heizvorrichtung zeigt,

Fig. 13 eine Aufsicht auf die in Fig. 12 dargestellte Steuerschaltung zeigt und

Fig. 14 schematisch den Aufbau eines Heiz-Klimagerätes in einem Kraftfahrzeug mit eine elektrischen Heizvorrichtung zeigt.

Die Erfindung betrifft Steuerschaltungen mit Leistungshalbleitern, die den den jeweils angeschlossenen Verbrauchern zuzuführenden Strom einstellen. Die Stromeinstellung erfolgt in Abhängigkeit von einem externen Signal, das der Steuerschaltung zugeführt wird.

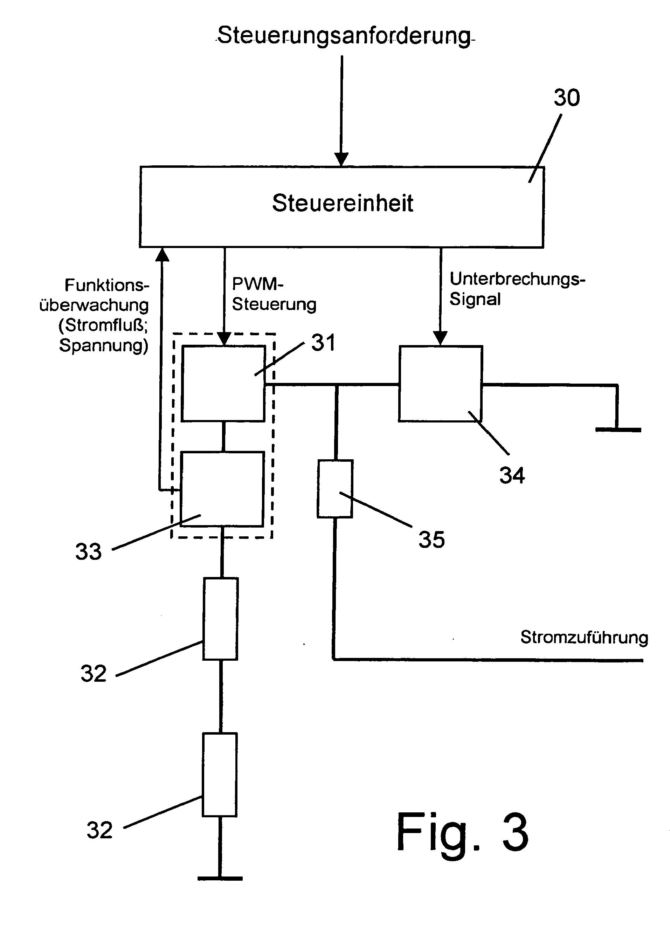

Das Prinzip, das der vorliegenden Erfindung zugrunde liegt, ist in dem schematisch dargestellten Aufbau des Sicherungskonzeptes einer Steuerschaltung in Fig. 3 wiedergegeben. Eine Steuereinheit 30 der Steuerschaltung erhält ein von außen zugeführtes Steuersignal, beispielsweise eine Heizleistungsanforderung für eine elektrische Heizvorrichtung. Das extern zugeführte Signal wird von der Steuerschaltung 30 in eine Ansteuerung, insbesondere eine Zu- bzw. Abschaltung der Verbraucher 32 umgesetzt. Der Einfachheit halber ist in Fig. 3 nur ein einziger Lastkreis mit Verbrauchern 32 dargestellt. In entsprechender Weise kann jedoch eine Vielzahl von Verbrauchern von der Steuereinheit 30 angesteuert werden. Die erfindungsgemäße Stromsicherung ist dabei gemeinsam für eine vorgegebene Mehrzahl von Leistungshalbleitern vorgesehen.

Die Steuereinheit 30 stellt den den Verbrauchern 32 zugeführten Strom ein. Über eine Stromüberwachung 33 wird die Funktion der Leistungshalbleiter 31 kontrolliert, die in Abhängigkeit von der Ansteuerung durch die Steuereinheit 30 den jeweils erforderlichen Strom den Verbrauchern 32 zuführen.

Die Stromüberwachung kann entweder über eine Strommessung oder alternativ über eine Überwachung der an dem Lastkreis des Leistungshalbleiters 31 anliegenden Spannung $U_L$ realisiert werden. Vorzugsweise ist die Überwachungsfunktion des Lastkreises in den Leistungshalbleiter integriert (durch die gestrichelte Einfassung der Blöcke 31 und 33 in Fig. 3 angedeutet).

Stellt die Steuereinheit 30 fest, dass ein Strom von dem Leistungshalbleiter 31 den zugeordneten Verbrauchern 32 zugeführt wird, obwohl der Leistungshalbleiter nicht entsprechend angesteuert wird, so leitet die Steuereinheit 30 eine Unterbrechung der Stromzufuhr zu dem Leitungshalbleiter 31 ein.

Vorzugsweise wird die Unterbrechung über eine Leiterbahnsicherung erreicht, die einem Kurzschlussstrom nicht standhält. Die Steuereinheit 30 erzeugt zu diesem Zweck ein Unterbrechungssignal, über das ein Kurzschlussschalter 34 die Stromzufuhr zu dem Leitungshalbleiter 31 kurzschließt. Diesem Kurzschlussstrom, der höher als der im ordnungsgemäßen Betrieb maximal fließende Strom ist, hält die im Strompfad liegende Leiterbahnsicherung 35 nicht stand. Das Leiterbahnstück 35 brennt an der Engstelle durch und unterbricht damit dauerhaft den Stromfluss zu dem Leitungshalbleiter 31. Auf diese Weise kann zuverlässig ein fehlerhaftes Halbleiterbauelement erkannt und dauerhaft außer Betrieb gesetzt werden.

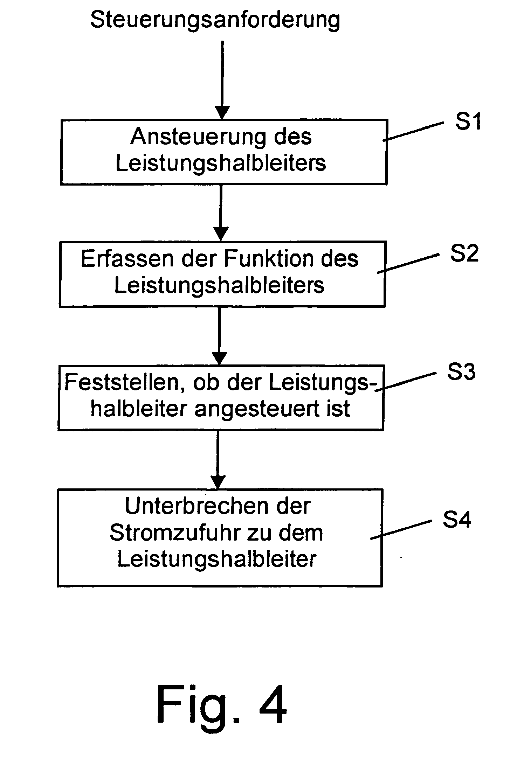

Das entsprechende Verfahren ist in dem Ablaufdiagramm der Fig. 4 dargestellt. In Abhängigkeit von einer externen Steuerungsanforderung werden die Leistungshalbleiter 31 im Schritt S1 angesteuert. Das tatsächliche Funktionieren der Leistungshalbleiter wird im Schritt S2 überwacht. Dazu wird erfasst, ob der Lastkreis des jeweiligen Leistungshalbleiters stromführend ist. Eine nicht ordnungsgemäße Funktionalität des Leistungshalbleiters liegt vor, wenn der Lastkreis stromführend ist, der Leistungshalbleiter jedoch nicht von der Steuereinheit entsprechend angesteuert wird (Schritt S3). Daraufhin wird im Schritt S4 die Stromzufuhr zu dem Leistungshalbleiter unterbrochen.

Um zuverlässig eine dauerhafte Unterbrechung der Stromzufuhr bei einer Mehrzahl separat angesteuerter Verbraucher erreichen zu können, werden vorzugsweise vor Aktivierung des Kurzschlussschalters 34 alle (abschaltbaren) Verbraucher abgeschaltet. Damit fließt kein Strom über die anderen Verbraucher ab und es kann ein möglichst hoher Kurzschlussstrom und damit eine sichere Unterbrechung der Zuleitung zu dem ausgefallenen Leistungshalbleiter 31 erreicht werden.

Zur Unterbrechung der Zuleitung zu dem ausgefallenen Leistungshalbleiter wird der Kurzschlussschalter 34 nur für eine kurze Zeit $T_{Br}$ aktiviert. Diese Zeitspanne ist so ausgelegt, dass der während dieser Zeitdauer fließende Kurzschlussstrom die Leiterbahnsicherung 35 sicher auftrennen sollte.

Die Sicherheit, bei Ausfall eines Leistungshalbleiters diesen zuverlässig abzuschalten, kann dadurch weiter erhöht werden, dass nach Ablauf der Zeitspanne $T_{Br}$ eine Überprüfung durchgeführt wird, ob die Stromzuführung zu dem ausgefallenen Leistungshalbleiter tatsächlich unterbrochen ist. Dazu wird, wie zuvor im Schritt S2, überprüft, ob der Lastkreis des Leitungshalbleiters stromdurchflossen ist. Wird dabei festgestellt, dass die Stromzufuhr nicht unterbrochen ist, so wird der Schritt S4 gegebenenfalls mehrfach wiederholt.

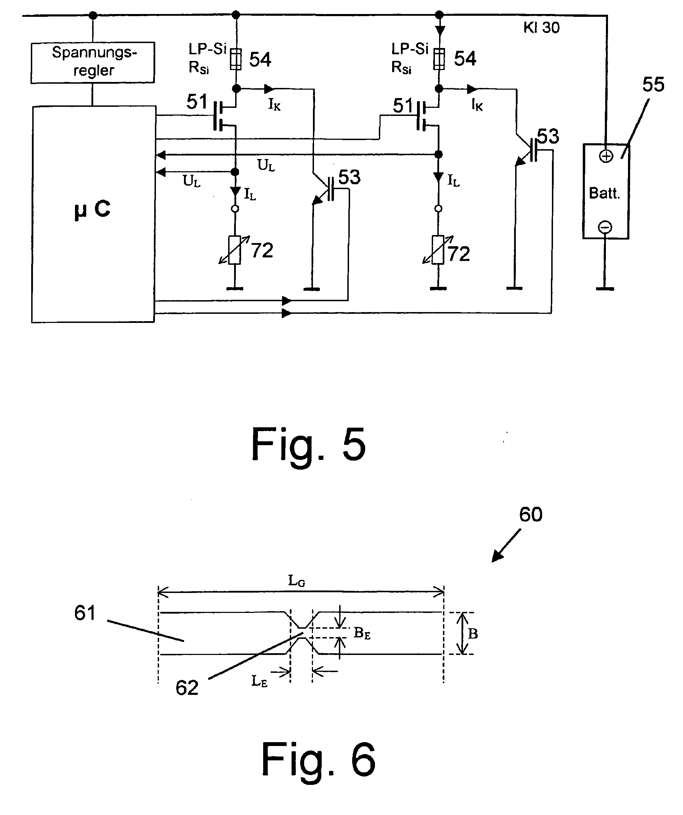

In Fig. 5 ist beispielhaft eine sichere Steuerschaltung für die Ansteuerung von Halbleiterschaltern dargestellt. Die Steuereinheit $\mu$C stellt über den Halbleiterschalter 51 jedem Verbraucher den von der Batterie 55 zuzuführenden Strom ein. Entsprechend der Ansteuerung der Halbleiterschalter 51 durch die Steuereinheit wird den Verbrauchern 52 Strom zugeführt.

Zusätzlich sind in Fig. 5 zwei Kurzschlussschalter 53 dargestellt, die jeweils einem Leistungshalbleiter 51 zugeordnet sind. Als Kurzschlussschalter werden vorzugsweise Halbleiterschalter mit einer hohen Stromtragfähigkeit verwendet.

Zusätzlich ist in den Strompfad zu den jeweiligen Leistungshalbleitern 51 eine Sicherung 54 geschaltet. Diese Sicherung ist vorzugsweise als Leiterbahnsicherung ausgestaltet. Wird einer der Kurzschlussschalter 53 von Steuereinheit leitend geschaltet, so wird die Stromzufuhr zu dem zu schützenden Leistungshalbleiter 51 und zu dem mit diesem verbundenen Verbraucher dauerhaft unterbrochen.

Durch die Ausbildung der Sicherung 54 als Leiterbahnsicherung ist diese Bestandteil der Leiterbahnstruktur und muss nicht als zusätzliches Bauteil montiert oder bestückt werden.

Im Gegensatz zur bekannten Schmelzsicherung löst das beschriebene Sicherungskonzept nicht passiv aufgrund eines erhöhten Stroms durch den Verbraucher, d.h. des Lastkreises aus. Ein erhöhter Lastkreisstrom kann beispielsweise durch einen Kurzschluss in der Last verursacht sein. Im Gegensatz dazu ist ein separater Kurzschlusspfad vorgesehen, in dem bei Aktivierung des Kurzschlussschalters ein erhöhter Strom fließt und ein Auslösen der Sicherung bewirkt. Anders als bei herkömmlichen Sicherungskonzepten wird nicht ein fehlerhafter Verbraucher abgeschaltet, sondern zuverlässig ein fehlerhafter Leistungshalbleiter.

Eine beispielhafte Gestaltung einer solchen Leiterbahnsicherung 54 ist in Fig. 6 dargestellt. Die Leiterbahnsicherung 60 ist vorzugsweise als Engstelle 62 mit der Breite $B_E$ in einem Leiterbahnzug 61 mit der Breite B angeordnet. Durch die Engstelle 62 kommt es in einem im Vergleich zu einer Gesamtlänge $L_G$ der Leiterbahn 60 kurzen Leiterbahnstück der Länge $L_E$ zu einer deutlichen Erhöhung des Widerstandes pro Länge. Damit bleibt der Gesamtwiderstand des Leiterbahnzuges und damit auch der Spannungsabfall über diesem nahezu unverändert niedrig, an der Engstelle 62 kommt es dagegen zu einem deutlichen Spannungsabfall $\Delta U$.

Im Kurzschlussfall kommt es durch den Kurzschlussstrom $I_K$ an der Engstelle 62 zu einer Verlustleistung $P_V$ mit einer starken Erwärmung, so dass das Leiterbahnstück 60 an der Engstelle 62 durchbrennt. Damit sind der Leiterbahnzug und der Stromfluss unterbrochen.

An der Engstelle 62 ist die Leiterbahn typischerweise aus einer Kupferfolie mit einer Dicke von 35 bis 70 $\mu$m ausgebildet. Durch eine geeignete Dimensionierung wird gewährleistet, dass im Normalbetrieb, wenn der Nennstrom $I_N$ mit $I_N \ll I_K$ fließt, die Erwärmung an der Engstelle 62 gering ist. Im Normalbetrieb kommt es somit nicht zu einem Durchbrennen des Leiterbahnstücks an der Engstelle 62.

Um ein zuverlässiges Durchbrennen der Leiterbahnsicherung 60 im Ansprechfall zu gewährleisten, muss der für das Durchbrennen erforderliche Kurzschlussstrom $I_K$ fließen. Der Kurzschlussstrom wird im Wesentlichen durch die Bordnetzspannung $U_B$ und über die Zuleitungswiderstände $R_{Zul}$ bestimmt. In erster Näherung gilt:

$$I_K = U_B \, / \, R_{Zul}.$$

Elektrische Steuerschaltungen zur Einstellung des einer Mehrzahl von Verbrauchern zuzuführenden Stroms weisen im Allgemeinen mehrere, getrennt schaltbare Lastkreise auf. Dadurch sind die Zuleitungswiderstände $R_{Zul}$, ausreichend niedrig, da die Zuleitungen nicht auf den Nennstrom eines Lastkreises, sondern auf den Summenstrom aller Lastkreise ausgelegt sind. In Fig. 5 sind beispielsweise zwei Lastkreise mit entsprechenden Verbrauchern 52 dargestellt, denen der benötigte Strom über die Leistungshalbleiter 51 zugeführt wird.

Um den Fehlerfall zu detektieren und die Leiterbahnsicherung auszulösen, wird zunächst die Erkennung eines nicht abschaltbaren Leistungshalbleiters durchgeführt. Zu diesem Zweck wird bei in der in Fig. 5 gezeigten Ausführungsform die Spannung $U_L$ des Lastkreises des Leistungshalbleiters 51 abgefragt. Bei einem nicht angesteuerten Leistungshalbleiter 51 ist der Lastkreis nicht stromdurchflossen und die Spannung daher 0 Volt. Wird jedoch eine Spannung $U_L$ größer als 0 Volt festgestellt, so ist der Leistungshalbleiter 51 trotz fehlender Ansteuerung leitend. In diesem Fall leitet die Steuereinheit eine Unterbrechung der Stromzufuhr zu diesem Leistungshalbleiter ein.

Um ein sicheres Durchbrennen der entsprechenden Leiterbahnsicherung 54 zu gewährleisten, werden in einem ersten Schritt alle Lastkreise abgeschaltet. Mit dieser Maßnahme wird gewährleistet, dass der Kurzschlussstrom $I_K$ vollständig zum Durchbrennen der Leiterbahnsicherung zur Verfügung steht. Anschließend wird der Kurzschlussschalter 53 für eine festgelegte Zeit $T_{Br}$ angesteuert.

Nach Ablauf der vorgegebenen Zeitspanne $T_{Br}$ wird überprüft, ob die Leiterbahnsicherung 54 tatsächlich durchgebrannt ist bzw. die Mehrzahl von Leiterbahnsicherungen. Zu diesem Zweck wird wiederum die Spannung $U_L$ des Lastkreises des entsprechenden Leistungshalbleiters 51 abgefragt. Gegebenenfalls werden die letzten beiden Schritte wiederholt durchgeführt, nämlich die Ansteuerung des Kurzschlussschalters 53 und die Überprüfung, ob die Leiterbahnsicherung tatsächlich durchgebrannt ist.

Als Kurzschlussschalter 53 kommen vorzugsweise Halbleiterschalter IGBTs oder Bipolartransistoren zum Einsatz, aber auch MOSFETs oder Thyristoren. Grundsätzlich sind ebenfalls elektromechanische Schalter in Form von Relais als Kurzschlussschalter verwendbar.

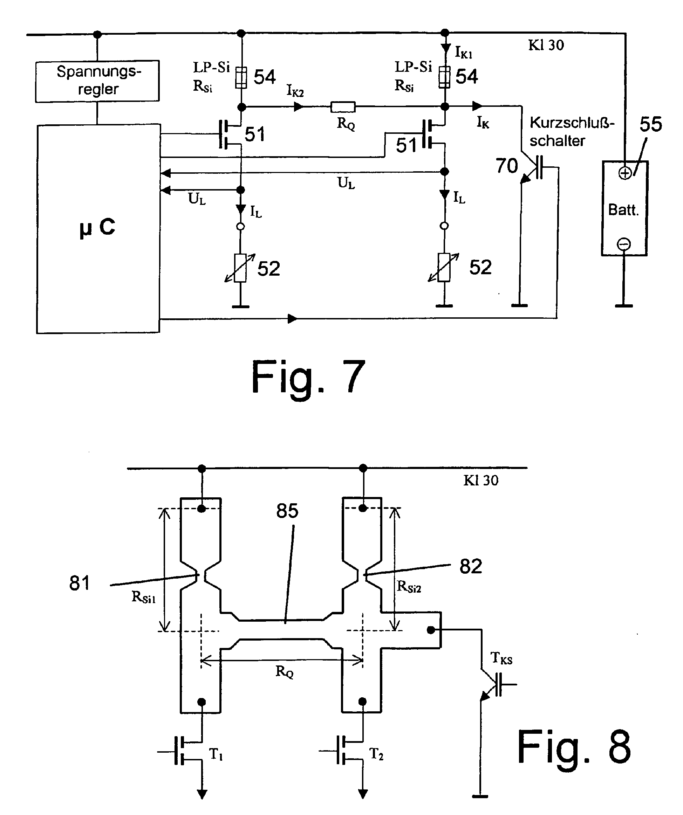

Eine erfindungsgemäße Implementierung des Sicherungskonzeptes für eine elektrische Steuerschaltung ist in Fig. 7 dargestellt. Um den zusätzlichen Hardwareaufwand und insbesondere auch den zusätzlichen Platzbedarf auf einer Steuerplatine zu vermindern, der durch das Sicherungskonzept erforderlich ist, wird ein Kurzschlussschalter 70 gleichzeitig zur Absicherung einer Mehrzahl von Lastkreisen verwendet. Der in Fig. 7 gezeigte Kurzschlussschalter 70 ersetzt die beiden in Fig. 5 dargestellten Kurzschlussschalter 53, die jeweils nur einem einzigen Leistungshalbleiter zugeordnet waren. Der Kurzschlussschalter 70 dient vorzugsweise zur Absicherung von zwei Lastkreisen, es ist aber auch jede andere Anzahl von entsprechend gekoppelten Lastkreisen möglich. Damit kann die Anzahl der zusätzlich erforderlichen Halbleiterbausteine für die Kurzschlussschalter und der zusätzliche Platzbedarf so gering wie möglich gehalten werden.

Mit dem in Fig. 7 gezeigten Sicherungskonzept werden im Fehlerfall zwei Leiterbahnsicherungen 54 mit der Auslösung des Kurzschlussschalters 70 durchtrennt. Eine beispielhafte Ausgestaltung für zwei entsprechend verbundene Leiterbahnsicherungen ist in Fig. 8 dargestellt.

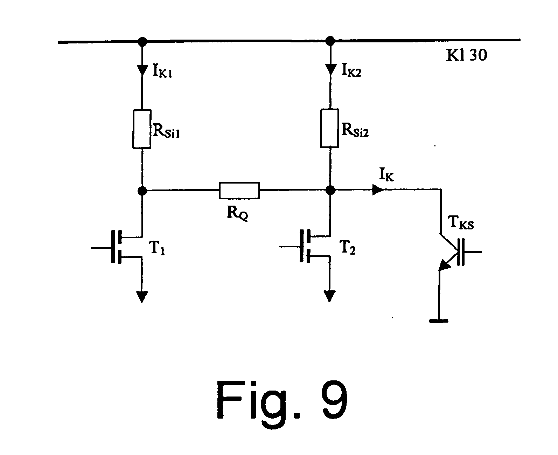

Zwischen der ersten Leiterbahn-Sicherung 81 und dem zugehörigen Leistungshalbleiter $T_1$ und der Leiterbahn-Sicherung 82 mit dem dazugehörigen Leistungshalbleiter $T_2$ befindet sich ein Quersteg 85 als elektrische Querverbindung, vorzugsweise in Form einer Leiterbahn Jedes Stück Leiterbahn der in Fig. 8 gezeigten beispielhaften Implementierung besitzt eine endliche elektrische Leitfähigkeit, die bei hohen Strömen nicht vernachlässigbar ist und zu Spannungsabfällen führt. Eine elektrische Ersatzschaltung mit elektrischen Widerständen der Anordnung nach Fig. 8 ist in Fig. 9 wiedergegeben.

Die beiden Leiterbahnzüge mit den Leiterbahn-Sicherungen 81, 82 werden durch die Widerstände $R_{Si1}$, $R_{Si2}$ repräsentiert. Die elektrische Querverbindung 85 wird durch den Widerstand $R_Q$ dargestellt. Bei durchgeschaltetem Kurzschlussschalter 70 ($T_{KS}$) teilt sich der Kurzschlussstrom $I_K$ auf die beiden Zweige auf, nämlich durch den Widerstand $R_{Si2}$ und durch die Reihenschaltung aus $R_{Si1}$ und $R_Q$. Für den Stromfluss gilt:

$$I_K = I_{K1} + I_{K2}.$$

Für die Stromaufteilung auf die beiden Zweige gilt:

$$I_{K2} / I_{K1} = (R_{Si1} + R_Q) / R_{Si2}.$$

Durch geeignete Wahl der Widerstände $R_{Si1}$, $R_{Si2}$, $R_Q$ lässt sich die Aufteilung des Kurzschlussstroms $I_K$ auf die Leiterbahnsicherungen 81, 82 einstellen. Damit lässt sich der Kurzschlussstrom so aufteilen, dass im Kurzschlussfall nur durch eine der Sicherungen ein um ein Mehrfaches höherer Strom als durch die andere/anderen fließt. Die Sicherung mit dem höheren Kurzschlussstrom wird daher zunächst durchbrennen. Anschließend fließt der gesamte Kurzschlussstrom über die andere Leiterbahnsicherung, so dass auch diese zuverlässig durchbrennt. Erfindungsgemäß wird daher bei einer Mehrzahl durchzutrennender Stromzuführungen eine schrittweise Durchtrennung jeder einzelnen Leiterbahnsicherung bewirkt. Auf diese Weise kann sicher ein zu niedriger Kurzschlussstrom für jede der durchzutrennenden Leiterbahnsicherungen verhindert werden.

Die aufeinanderfolgende Durchtrennung der Leiterbahnsicherungen einer "Sicherungsgruppe" wird im folgenden Ausführungsbeispiel erläutert. Dazu wird angenommen, dass:

$$R_{Si1} = R_{Si2} = R_{Si}$$

$$R_Q = 2 * R_{Si}.$$

Demzufolge ergibt sich:

$$I_{K2} / I_{K1} = (R_{Si} + 2 * RSi) / R_{Si} = 3$$

bzw.

$$I_{K2} = 3 * I_{K1}.$$

Im Kurzschlussfall fließen demgemäss zunächst 75 % des Kurzschlussstroms $I_K$ durch die Leiterbahnsicherung 82. Nachdem die Leiterbahnsicherung 82 durchgebrannt ist, fließt der gesamte Kurzschlussstrom (100 %) durch die zweite Leiterbahnsicherung 81. Damit ist ein sicheres Durchbrennen beider Leiterbahnsicherungen 81, 82 gewährleistet, um den Stromfluss durch die Lastkreise beider Leistungshalbleiter 51 bei einem Defekt eines der beiden Halbleiterschalter 51 sicher zu unterbrechen.

Das obengenannte Ausführungsbeispiel dient nur der Illustration der besonderen Ausgestaltung der vorliegenden Erfindung. Selbstverständlich sind beliebige andere Kombinationen von Widerständen $R_{Si1}$, $R_{Si2}$, $R_Q$ bzw. Auslegungen der beiden Leiterbahnsicherungen 81, 82 und des Querstegs 85 möglich. Die vorliegende Erfindung ist nicht auf die oben beschriebene Auslegung der Widerstände eingeschränkt. Ebenso ist die vorliegende Erfindung nicht auf die Verwendung von einer Gruppe aus allein zwei Leiterbahnsicherungen 81, 82 die über einen Quersteg miteinander verbunden sind, beschränkt. Eine beliebige Anzahl von Leistungshalbleitern 51 kann in entsprechender Weise abgesichert werden.

Normalerweise wird die Steuervorrichtung beim Ausschalten der Zündung des Kraftfahrzeugs deaktiviert. Ausgewählte Lastkreise können jedoch auch so an das Bordnetz des Kraftfahrzeugs angeschlossen sein, dass Sie bei abgestelltem Fahrzeug aktivierbar sind. Ein Halbleiterausfall kann somit auch bei ausgeschalteter Zündung auftreten. Das ausgefallene Leistungshalbleiterbauelement führt dann Strom dem entsprechenden Verbraucher zu - mit den oben beschriebenen negativen Folgen. Um auch bei abgestelltem Kraftfahrzeug einen Schaden für die den Verbraucher, die Steuerschaltung und das Kraftfahrzeug bei Ausfall eines Transistors zu vermeiden, werden nachfolgend zwei alternative, besondere Ausgestaltungen der Erfindung beschrieben.

Gemäß einer ersten Ausführungsform zur Absicherung der Steuerschaltung gegen einen Ausfall eines Leistungshalbleiters bei Zündung AUS wird die Betriebsspannung jedes Lastkreises $U_L$ der in Fig. 5 und Fig. 7 gezeigten Steuereinheit bzw. dem Spannungsregler zugeführt.

Sobald einer der Leistungshalbleiter 51 ausfällt und ständig leitend ist, liegt die Spannung $U_L$ auf Batterieniveau. Diese Spannung wird dem Spannungsregler zugeführt, der daraufhin die Steuereinheit µC mit Spannung versorgt und aktiviert.

Bei der Stellung Zündung AUS des Kraftfahrzeugs ist die Steuereinheit µC abgeschaltet und alle Leistungshalbleiter 51 gesperrt geschaltet. Keiner der Verbraucher ist daher mit Strom versorgt und die Spannung $U_L$ ist Null. Tritt ein Halbleiterdefekt in einem der Leistungshalbleiter 51 auf, so ist der entsprechende Lastkreis von Strom durchflossen und die Steuereinheit µC wird automatisch aktiviert. Durch diese Aktivierung wird der Fehler in der Funktion einer der Leistungshalbleiter 51 detektiert und der entsprechende Leistungshalbleiter (bzw. die Gruppe von Leistungshalbleitern gemäß Fig. 7) von der Stromzuführung durch Unterbrechung der Leiterbahnsicherungen - wie oben beschrieben - getrennt.

Mit der erfolgreichen Trennung des defekten Leistungshalbleiters 51 von der Stromversorgung ist auch die Steuereinheit µC von der Stromzufuhr getrennt und damit anschließend wieder automatisch deaktiviert.

Gemäß einer zweiten alternativen Ausführungsform wird die Steuereinheit µC in periodischen Zeitabständen aktiviert. Zu diesem Zweck befindet sich die Steuereinheit in einem "Sleep"-Modus mit einer Stromaufnahme von nur wenigen µA. Durch einen internen Zeitgeber, der vorzugsweise in den Spannungsregler oder die Steuereinheit µC integriert ist, wechselt die Steuereinheit in den aktiven Arbeitsmodus und überprüft die ordnungsgemäße Funktionalität der Ansteuerung der Lastkreise.

Zur periodischen Überwachung wechselt die Steuereinheit vorzugsweise in Zeitabständen zwischen 10ms und 1 s zwischen dem Sleep-Modus und dem aktiven Arbeitsmodus. Damit wird erreicht, dass die mittlere Stromaufnahme im Bereich weniger µA bleibt. Wird ein defekter Leistungshalbleiter 51 erkannt, löst die Steuereinheit automatisch ein Abtrennen dieses Leistungshalbleiters von der Stromversorgung in der erfindungsgemäßen Weise aus.

Nachfolgend wird der Einsatz der erfindungsgemäßen Steuervorrichtung in einer elektrischen Heizvorrichtung beschrieben. Dazu wird zunächst der Aufbau der elektrischen Heizvorrichtung mit Heizelementen als Verbraucher dargestellt, und zwar in unterschiedlichen Ausführungsformen zum Einsatz in Kraftfahrzeugen.

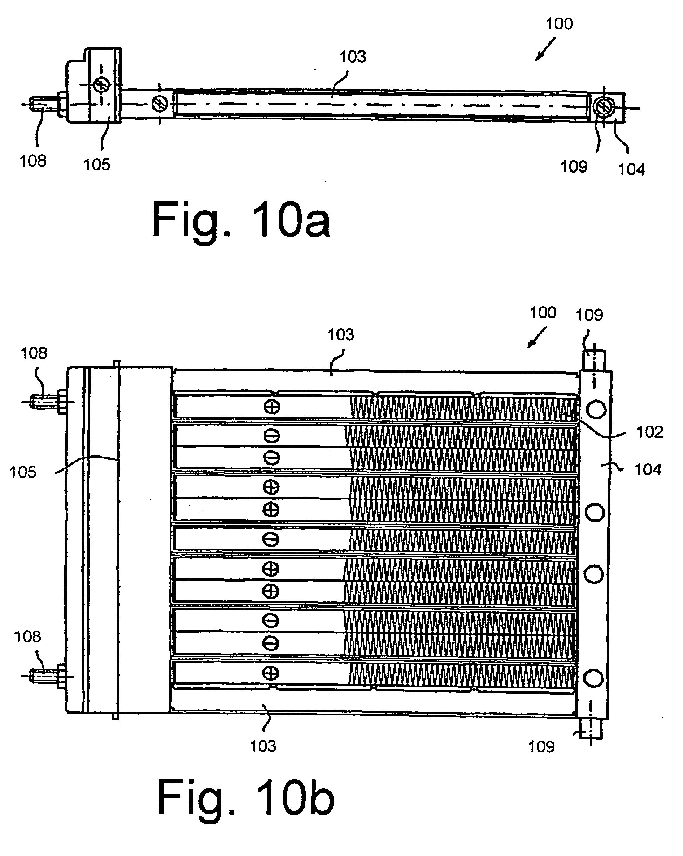

Ein Beispiel einer elektrischen Heizvorrichtung für den Einsatz in Kraftfahrzeugen ist in Fig. 10a und Fig.

10b dargestellt. Während Fig. 10b eine Aufsicht auf die elektrische Heizvorrichtung zeigt, ist in Fig. 10a eine Seitenansicht wiedergegeben. Die elektrische Heizvorrichtung 100 weist ein Heizregister auf, das aus einer Mehrzahl geschichteter Heizelemente und benachbart zu diesen angeordneten Radiatorelementen bzw. Wärmeleitblechen besteht. Die Heizelemente sind als Widerstandselemente, insbesondere als PTC-Heizelemente ausgebildet.

Das in Fig. 10a und Fig. 10b gezeigte Heizregister ist in einem Rahmen gehalten, der aus gegenüberliegend angeordneten Längsholmen 103 und senkrecht zu diesen angeordneten Seitenholmen-104 und 105 besteht. Die Holme des Rahmens sind aus Metall oder Kunststoff gefertigt.

Die beiden Fig. 10b gezeigten Längsholme 103 sind im Wesentlichen gleich aufgebaut. Die gegenüberliegend angeordneten Seitenholme 104 und 105 unterscheiden sich jedoch dahingehend, dass der Seitenholm 105 als einseitig offener Kasten ausgebildet ist. Der kastenförmige Seitenholm 105 ist auf der dem Heizregister gegenüberliegenden Seite offen ausgebildet. In diesen Kasten ist eine Steuervorrichtung einsetzbar, die die Wärmeabgabe der Heizstufen des Heizregisters, insbesondere der PTC-Heizelemente, über eine Regelung des zugeführten Stroms steuert. Die offene Seite des als Kasten ausgebildeten Seitenholms 105 kann nach dem Einsetzen der Steuervorrichtung mit einem aufsteckbaren oder aufklebbaren Deckel vorschlossen werden.

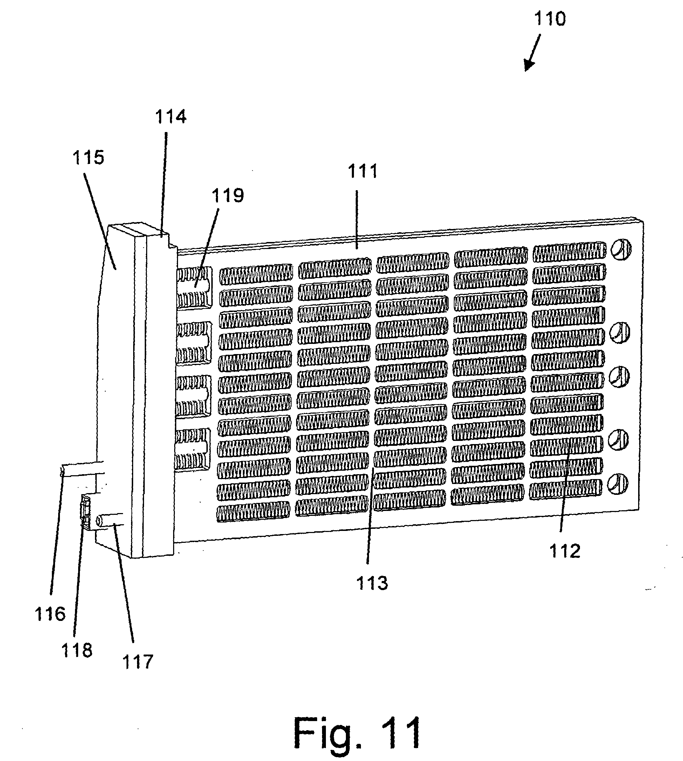

Andere Bauformen einer elektrischen Heizvorrichtung halten den geschichteten Aufbau aus Heizelementen und Radiatorelementen in einem Kunststoffgehäuse zusammen. Ein Beispiel für einen solchen Aufbau ist in Fig. 11 wiedergegeben und wird nachfolgend unter Bezugnahme auf Fig. 11 im einzelnen beschrieben.

In die Heizvorrichtung ist eine Steuereinheit integriert, die die Heizleistung der Heizelemente einstellt. Die Steuereinheit ist vorzugsweise in Form einer Platine mit einer Mehrzahl von Leistungshalbleiterbauelementen realisiert. Die Leistungshalbleiter stellen den den Heizelementen zuzuführenden Strom gemäß der Ansteuerung durch die Steuereinheit ein. Der von der Steuereinheit auf die einzelnen Heizstufen aufgeteilte Strom wird über Anschlussbolzen 118 der Heizvorrichtung zugeführt. Die Anschlussbolzen sind so ausgebildet, dass sie die geforderten Heizströme bis zu 200 Ampere problemlos leiten können.

Zusätzlich ist die Heizvorrichtung, insbesondere im Bereich der Steuereinheit, mit einem Steckersockel ausgestattet, der eine externe Ansteuerung der Heizvorrichtung ermöglicht, insbesondere zur Zuführung einer Heizleistungsanforderung. Vorzugsweise wird die Heizleistungsanforderung über einen Kraftfahrzeugbus zugeführt.

In den in Fig. 10 und Fig. 11 gezeigten Ausführungsformen elektrischer Luftheizer ist jeweils an einem Ende des Heizregisters in einem Gehäuseabschnitt eine Steuerplatine mit den Leistungshalbleitern angeordnet.

Die in Fig. 11 gezeigte Ausführungsform unterscheidet sich von der in Fig. 10 dargestellten Ausführungsform in dem Aufbau des Heizregistergehäuses. Während die Radiatorelemente und Heizelemente gemäß Fig. 10 in einem aus Holmen 103, 104 und 105 gebildeten Rahmen gehalten werden, werden gemäß Fig. 11 die Radiatorelemente 112 und Heizelemente in einem Kunststoffgehäuse gehalten, das an den Luftdurchtrittsöffnungen über ein gitterartige Struktur 113 verstärkt ist.

Bei beiden Ausführungsformen gemäß Fig. 10 und Fig. 11 ist die Steuereinheit außerhalb des Luftkanals des aufzuheizenden Luftstroms eines Heiz-Klimagerätes in einem Kraftfahrzeug angeordnet, und zwar in einem separaten Gehäuseabschnitt. In den Luftkanal des Heiz-Klimagerätes des Kraftfahrzeugs ragt nur das Heizregister 111.

Fig. 11 zeigt zusätzlich eine besondere Ausgestaltung der Kühlung der Leistungshalbleiter der Steuereinheit. Zu diesem Zweck ragen die Kühlelemente 119 in Fenster, die in dem Heizregisterabschnitt vorgesehen sind. Die Fenster für die Kühlelemente ragen ebenfalls in den Luftkanal und geben ihre Wärme an die aufzuheizende Luft ab. Auf diese Weise kann die in den Leistungshalbleitern produzierte Verlustleistung effizient und energiesparend abgeführt werden.

Die in Fig. 11 gezeigte Heizvorrichtung 110 umfasst außer dem Heizregister 111 einen Gehäuseabschnitt 114, der die Steuerplatine aufnimmt, und einen Deckel 115, der den "Elektronikraum" der Steuerelektronik abdeckt.

Die elektrische Heizvorrichtung weist folgende externe Anschlüsse- auf. Zwei Anschlussbolzen 108 bzw. 116, 117, über die die Heizvorrichtung mit Masse und dem Pluspol des Bordnetzes verbindbar ist. Zusätzlich ist die Heizvorrichtung mit einem Anschluss 118 ausgestattet, über den insbesondere eine Heizleistungsanforderung an die Steuerschaltung übertragen wird. Vorzugsweise erfolgt die Übertragung der Heizleistungsanforderung und möglicher weiterer Steuerbefehle über einen Kraftfahrzeugdatenbus, insbesondere den CAN-Bus.

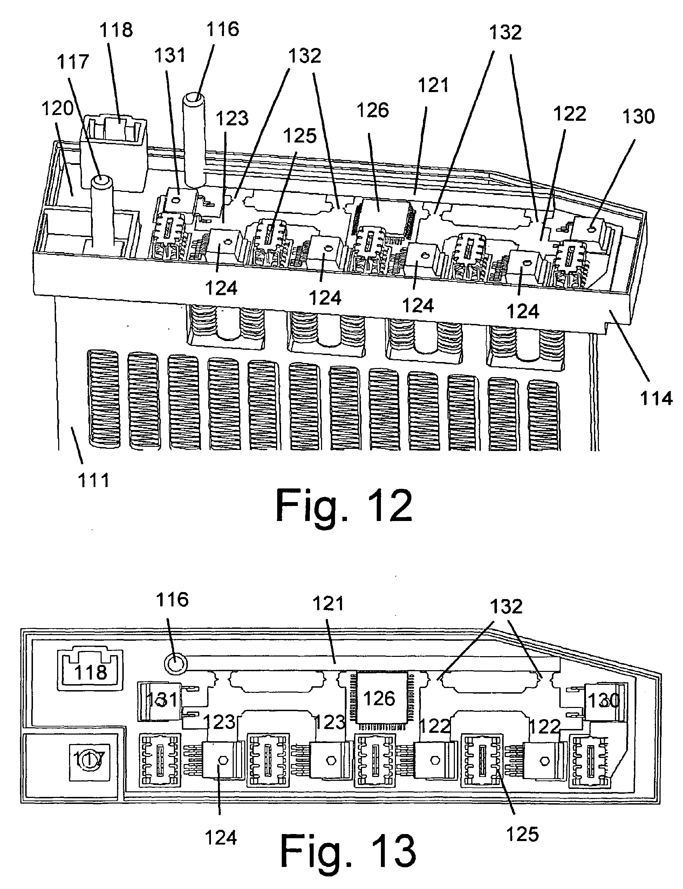

Eine beispielhafte Realisierung der Steuerschaltung einer Heizvorrichtung ist in Fig. 12 und Fig. 13 wiedergegeben. Fig. 12 zeigt eine perspektivische Ansicht der Steuerschaltung der in Fig. 11 dargestellten Heizvorrichtung, bei der der Deckel 115 abgenommen wurde, und Fig. 13 eine Aufsicht auf die Steuerplatine 120.

Die in den Gehäuseabschnitt 114 eingesetzte Steuerplatine 120 verteilt den über den Anschlussbolzen 116 aufgenommen Strom und verteilt diesen über eine Stromschiene 121 an die einzelnen Leistungshalbleiter 124 über Stromzuführungen 122, 123. In Abhängigkeit von der Heizleistungsanforderung steuert der Microcontroller 126 (d.h. die Steuereinheit) die Leistungshalbleiter 124 an. Die Leistungshalbleiter 124 führen gemäß den Steuersignalen von dem Microcontroller 126 Strom den jeweiligen Heizstufen zu. Vorzugsweise setzt der Microcontroller die Heizleistungsanforderung über eine Puls-Breiten-Modulation (PWM) in Steuersignale an die Leistungshalbleiter um. Gemäß der in Fig. 12 und Fig. 13 dargestellten Ausführungsform wird der Strom über aus dem Heizregister in die Federelemente 125 ragende Kontaktzungen übertragen.

Die in Fig. 12 und Fig. 13 dargestellte Heizvorrichtung umfasst insgesamt vier Heizstufen, die von jeweils einem Leistungshalbleiter 124 gesteuert werden. Jedem Leistungshalbleiter 124 wird Strom zur Zuführung zu den Heizelementen von der Stromschiene 121 über Leiterbahnverbindungen 122, 123 zugeführt. Gemäß der leitend/nicht-leitend Ansteuerung durch den Microcontroller 126 stellt jeder Leistungshalbleiter den jeweils den Heizelementen zuzuführenden Strom ein, so dass der Strom entsprechend an die-PTC-Heizelemente in dem Heizregister-weitergeleitet wird.

Bei einem Ausfall des Leistungshalbleiters 124 ist dieser dauerhaft leitend und erlaubt keine Abschaltung des den Heizelementen zugeführten Stroms mehr. Dabei wächst die im Leistungshalbleiter 124 umgesetzte Verlustleistung an und es kommt zu einer übermäßigen Erwärmung dieses Bauteils. Dies führt zu einer thermische Überlastung der gesamten Baugruppe mit der Folge von Verschmorung und auch von weiteren Schäden im Umfeld.

Um einen solchen Defekt in einer PTC-Heizung sicher erkennen zu können, wird überprüft, ob der Lastkreis des Leistungshalbleiters 124 stromdurchflossen ist. Zu diesem Zweck wird entweder der Strom gemessen oder die Spannung des Lastkreises überprüft. Besonders effizient und mit besonders geringem zusätzlichen Hardwareaufwand und zusätzlichem Platzbedarf werden als Leistungshalbleiter 124 vorzugsweise Bauelemente mit integrierter Stromüberwachung verwendet, sogenannte "smart power Transistors".

Sobald in der Steuereinheit 126 festgestellt wird, dass ein Leistungshalbleiter 124 seinem Lastkreis, d.h. seiner Heizstufe, Strom zuführt, obwohl keine entsprechende Ansteuerung durch die Steuereinheit 126 vorliegt, wird eine Unterbrechung der Stromzufuhr zu (mindestens) diesem Leistungshalbleiter 124 eingeleitet. Zu diesem Zweck sind entsprechende Kurzschlussschalter 130, 131 auf der Steuerplatine 120 vorgesehen, die die Stromzufuhr von der Stromschiene 121 zu diesem Leistungshalbleiter direkt auf Masse schalten, um durch die Stromüberlastung der Leitung eine Unterbrechung in der Zuleitung zu dem Leistungshalbleiter 124 zu erreichen.

Damit durch den erhöhten Strom eine entsprechende Unterbrechung der Stromzufuhr erreicht wird, sind in dem Strompfad zu allen Leistungshalbleitern 124 jeweils Leiterbahnsicherungen 132 vorgesehen. Die Leiterbahnsicherungen 132 sind als Engstelle in dem Strompfad ausgebildet, die jeweils dem Kurzschlussstrom nicht standhält.

Die Ausgestaltung der Absicherung entspricht dem im Zusammenhang mit den Figuren 3 bis 9 beschriebenen Sicherungskonzept.

In Kraftfahrzeugen mit verbrauchsoptimierten Motoren werden elektrische Heizvorrichtungen zur Beheizung des Innenraums und auch des Motors verwendet. Gleich nach dem Start des Verbrennungsmotors kann dieser noch nicht ausreichend Wärmeenergie zur Verfügung stellen. Dieser Zeitraum kann mit elektrischen Zusatzheizungen überbrückt werden.

Der Einsatz von elektrischen Heizvorrichtungen ist jedoch nicht auf den Kraftfahrzeugbereich beschränkt. Elektrische Heizvorrichtungen sind auch für eine Mehrzahl anderer Einsatzzwecke geeignet, insbesondere im Bereich von Hausinstallationen zur Raumklimatisierung, Industrieanlagen und dergleichen.

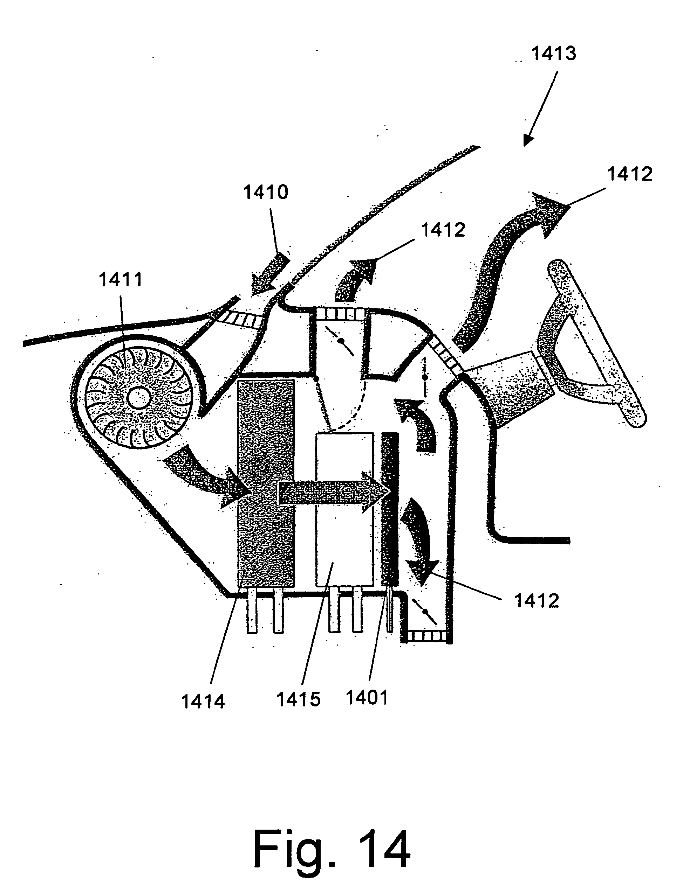

Die elektrischen Zusatzheizungen dienen vorzugsweise zum Einsatz in einem Heiz-Klimagerät in Kraftfahrzeugen. Ein Beispiel für ein solches Heiz-Klimagerät ist in Fig. 14 dargestellt. Das Heiz-Klimagerät saugt Außenluft 1410 über ein Gebläse 1411 an, die dem Kraftfahrzeuginnenraum 1413 zugeführt wird. Dabei durchströmt die Luft zuvor einen Verdampfer 1414 und einen Wasser-Wärmetauscher 1415. Der Wasser-Wärmetauscher 1415 gibt die Wärmeenergie des Kühlwassers an die dem Innenraum zuzuführende Luft ab. Anschließend strömt die erwärmte Luft 1412 über entsprechende Ausströmer in den Kraftfahrzeuginnenraum 1413.

Solange die Höhe der Kühlwassertemperatur nicht ausreicht, um die angesaugte Luft 1410 genügend zu erwärmen, übernimmt diese Aufgabe eine elektrische Zusatzheizung 1401. Diese ist vorzugsweise dem Wärmetauscher 1415 nachgeschaltet.

Zusammenfassend betrifft die vorliegende Erfindung eine elektrische- Steuerschaltung zur Ansteuerung einer Mehrzahl von Verbrauchern mit einem verbesserten Sicherheitskonzept. Zu diesem Zweck wird die Funktion eines Leistungshalbleiters, der zur Einstellung des Stroms, der einem Verbraucher zugeführt wird, dient, überwacht. Sobald der Leistungshalbleiter einem Verbraucher ohne eine entsprechende Ansteuerung Strom zuführt, wird der Strompfad zu dem Leistungshalbleiter dauerhaft unterbrochen, und zwar über einen Kurzschlussschalter, der eine Mehrzahl von Stromzuführungen zu den Leistungshalbleitern gemeinsam durchtrennt und diese damit abschaltet. Auf diese Weise kann ein fehlerhafter Lastschalter zuverlässig außer Betrieb gesetzt und ein Folgeschaden mit minimalem Aufwand insbesondere für den Einsatz in Kraftfahrzeugen verhindert werden.

**Patentansprüche**

1. Steuerschaltung für eine Mehrzahl elektrischer Verbraucher (52), insbesondere in einem Kraftfahrzeug, mit jeweils einem jedem Verbraucher (52) zugeordneten Leistungshalbleiter (51) zur Einstellung des dem Verbraucher (52) zugeführten Stroms und einer Steuereinheit ($\mu$C) zur Ansteuerung der Leistungs-

halbleiter (51), umfassend:

ein Unterbrecherelement (54, 81, 82), das jeweils in der Stromzuführung zu einem Leistungshalbleiter (51) angeordnet ist, und einen Kurzschlussschalter (70), der mit der Mehrzahl von Stromzuführungen zu den Leistungshalbleitern (51) verbunden ist und in Abhängigkeit von einem Kurzschlusssignal der Steuereinheit (μC) über einen Kurzschluss eine Unterbrechung der Unterbrecherelemente (54, 81, 82) bewirkt,
**gekennzeichnet durch**
eine Überwachungseinrichtung zur Erfassung, ob ein Leistungshalbleiter (51) dem jeweiligen Verbraucher (52) Strom zuführt, und **dadurch**, dass
der Kurzschlussschalter (70) über jeweils einen zwei benachbarte Stromzuführungen miteinander verbindenden Quersteg (85) mit den Stromzuführungen der Leistungshalbleiter (51) verbunden ist und
dass die Steuereinheit (μC) eine Unterbrechung der Mehrzahl der mit dem Kurzschlussschalter (70) verbundenen Stromzuführungen **durch** Aktivierung
des Kurzschlussschalters (70) veranlasst, wenn die Überwachungseinrichtung (μC) eine Stromzufuhr zu einem der Verbraucher (52) über einen Leistungshalbleiter (51) feststellt, dessen Stromzuführung mit dem Kurzschlussschalter (70) verbunden ist, ohne dass eine entsprechende Ansteuerung des Leistungshalbleiters (51) **durch** die Steuereinheit (μC) vorliegt, wobei die elektrischen Widerstände der Unterbrecherelemente (54, 81, 82) und des wenigstens einen Querstegs (85) so ausgelegt sind, dass gleichzeitig jeweils nur an einem der Unterbrecherelemente (54, 81, 82) ein ausreichend hoher Kurzschlussstrom anliegt und die Unterbrecherelemente (54, 81, 82) die Mehrzahl der Stromzuführungen zu den Leistungshalbleitern (51) bei der Aktivierung des Kurzschlussschalters (70) jeweils aufeinanderfolgend auftrennen.

2. Steuerschaltung nach Anspruch 1, wobei die Überwachungseinrichtung in den Leistungshalbleiter (51) integriert ist.

3. Steuerschaltung nach Anspruch 1 oder 2, wobei ein Unterbrecherelement (54) in einem Leitungsabschnitt der Stromzuführung zu dem jeweiligen Leistungshalbleiter (51) angeordnet ist und der Leitungsabschnitt so ausgelegt ist, dass ein von dem Kurzschlussschalter (54) verursachter Kurzschlussstrom eine Leitungsunterbrechung bewirkt.

4. Steuerschaltung nach Anspruch 3, wobei der Leitungsabschnitt (55) ein Leiterbahnabschnitt der Stromzuführung ist.

5. Steuerschaltung nach Anspruch 4, wobei der Querschnitt der Leiterbahn so dimensioniert ist, dass die Leiterbahn die Stromzuführung bei einem vorgegebenen Stromwert unterbricht.

6. Steuerschaltung nach einem der Ansprüche 1 bis 5, wobei die Unterbrecherelemente (54) ausgehend von dem dem Kurzschlussschalter (70) benachbarten Unterbrecherelement (54) aufeinanderfolgend die Stromzuführungen zu den Leistungstransistoren (51) unterbrechen.

7. Steuerschaltung nach einem der Ansprüche 1 bis 6, wobei ein Quersteg (85) jeweils die Leitungsabschnitte zwischen dem Unterbrecherelement (54) und dem Leistungshalbleiter (51) der Stromzuführungen miteinander verbindet.

8. Steuerschaltung nach einem der Ansprüche 1 bis 7, wobei der elektrische Widerstand eines Querstegs (85) größer als der elektrische Widerstand eines Unterbrecherelements (81, 82) ist.

9. Steuerschaltung nach einem der Ansprüche 1 bis 8, wobei der Kurzschlussschalter (70) mit den Stromzuführungen zu zwei Leistungshalbleitern (51) verbunden ist und bei Ausfall eines der Leistungshalbleiter (51) beide Stromzuführungen unterbricht.

10. Steuerschaltung nach einem der Ansprüche 1 bis 9, wobei der Kurzschlussschalter (54) eine Relais oder eine Halbleiterschalter ist, insbesondere ein IGBT.

11. Steuerschaltung nach einem der Ansprüche 1 bis 10, wobei die Steuereinheit (μC) elektrisch mit den Lastkreisen der Leistungshalbleiter (51) zur automatischen Aktivierung der Steuereinheit (μC) bei Ausfall des Leistungshalbleiters (51) bei abgestellter Zündung des Kraftfahrzeug verbunden ist.

12. Steuerschaltung nach einem der Ansprüche 1 bis 11, wobei die Steuereinheit (μC) bei abgestellter Zündung des Kraftfahrzeugs in periodischen Zeitabständen aktiviert wird.

13. Steuerschaltung nach einem der Ansprüche 1 bis 12, wobei die Steuerschaltung zur Ansteuerung von PTC-Heizelementen (52) als Verbraucher in einer elektrischen Heizvorrichtung für Kraftfahrzeuge mit einer Mehrzahl von Heizstufen verwendet wird, wobei die Leistungshalbleiter (51) den jeder Heizstufe zuzuführenden Strom einstellen.

14. Verfahren zur Absicherung der Ansteuerung einer Mehrzahl elektrischer Verbraucher (52), insbesondere in einem Kraftfahrzeug, mit jeweils einem jedem Verbraucher (52) zugeordneten Leistungshalbleiter (51) zur Einstellung des dem Verbraucher (52) zugeführten Stroms, umfassend:

Aktivieren eines Kurzschlussschalters (70), der mit der Mehrzahl von Stromzuführungen zu den Leistungshalbleitern (51) verbunden ist, zur Unterbrechung der Stromzuführungen zu den mit dem Kurzschlussschalter (70) verbundenen Leistungshalbleitern (51), wobei ein Unterbrecherelement (54) in einem Leitungsabschnitt der Stromzuführung zu dem jeweiligen Leistungshalbleiter (51) angeordnet ist und der Leitungsabschnitt so ausgelegt ist, dass ein von dem Kurzschlussschalter (54) verursachter Kurzschlussstrom eine Leitungsunterbrechung bewirkt, **gekennzeichnet durch** Überwachen der Zuführung von Strom von einem Leistungshalbleiter (51) zu dem jeweiligen Verbraucher (52) und **dadurch**, dass die Mehrzahl der Stromzuführungen zu den Leistungshalbleitern (51) bei der Aktivierung des Kurzschlussschalters (70) jeweils aufeinanderfolgend aufgetrennt werden, wenn in dem Überwachungsschritt eine Stromzufuhr zu einem der Verbraucher (52) über einen Leistungshalbleiter (51) feststellt wird, dessen Stromzuführung mit dem Kurzschlussschalter (70) verbunden ist, ohne dass eine entsprechende Ansteuerung des Leistungshalbleiters (51) vorliegt, wobei zur Unterbrechung der Stromzuführungen gleichzeitig jeweils nur **durch** eine der Stromzuführungen ein zur Unterbrechung ausreichend hoher Kurzschlussstrom fließt.

15. Verfahren nach Anspruch 14, wobei der Überwachungsschritt von dem Leistungshalbleiter (51) ausgeführt wird.

16. Verfahren nach Anspruch 14 oder 15, wobei der Leitungsabschnitt (55) ein Leiterbahnabschnitt der Stromzuführung ist.

17. Verfahren nach Anspruch 16, wobei der Querschnitt der Leiterbahn so dimensioniert wird, dass die Leiterbahn die Stromzuführung bei einem vorgegebenen Stromwert unterbricht.

18. Verfahren nach einem der Ansprüche 14 bis 17, wobei die Stromzuführungen zu den Leistungstransistoren (51) ausgehend von der dem Kurzschlussschalter (70) benachbarten Stromzuführung aufeinanderfolgend unterbrochen werden.

19. Verfahren nach einem der Ansprüche 14 bis 18, wobei der Kurzschlussschalter (70) über jeweils einen zwei benachbarte Stromzuführungen miteinander verbindenden Quersteg (85) mit den Stromzuführungen der Leistungshalbleiter (51) verbunden ist.

20. Verfahren nach Anspruch 19, wobei ein Quersteg (85) jeweils die Leitungsabschnitte zwischen dem Unterbrecherelement (54) und dem Leistungshalbleiter (51) der Stromzuführungen miteinander verbindet.

21. Verfahren nach Anspruch 19 oder 20, wobei die elektrischen Widerstände der Unterbrecherelemente (81, 82) und des wenigstens einen Querstegs (85) so ausgelegt sind, dass gleichzeitig jeweils nur durch ein Unterbrecherelement (81, 82) ein ausreichend hoher Kurzschlussstrom fließt.

22. Verfahren nach einem der Ansprüche 19 bis 21, wobei der elektrische Widerstand eines Querstegs (85) größer als der elektrische Widerstand eines Unterbrecherelements (81, 82) ist.

23. Verfahren nach einem der Ansprüche 14 bis 22, wobei der Kurzschlussschalter (70) mit den Stromzuführungen zu zwei Leistungshalbleitern (51) verbunden ist und bei Ausfall eines der Leistungshalbleiter (51) beide Stromzuführungen unterbricht.

24. Verfahren nach einem der Ansprüche 14 bis 23, wobei der Kurzschlussschalter (54) ein Relais oder ein Halbleiterschalter ist, insbesondere ein IGBT.

25. Verfahren nach einem der Ansprüche 14 bis 24, wobei Schritte zur Überwachung und Unterbrechung von einer Steuereinheit (μC) ausgeführt werden, die elektrisch mit den Lastkreisen der Leistungshalbleiter (51) zur automatischen Aktivierung der Steuereinheit (μC) bei Ausfall des Leistungshalbleiters (51) bei abgestellter Zündung des Kraftfahrzeug verbunden ist.

26. Verfahren nach einem der Ansprüche 14 bis 25, wobei die Überwachung bei abgestellter Zündung des Kraftfahrzeugs in periodischen Zeitabständen aktiviert wird.

27. Verfahren nach einem der Ansprüche 14 bis 26, wobei das Verfahren in der Steuerschaltung einer elektrischen Heizvorrichtung für Kraftfahrzeuge zur Ansteuerung von PTC-Heizelementen (52) als Verbraucher in der elektrischen Heizvorrichtung mit einer Mehrzahl von Heizstufen verwendet wird, wobei die Leistungshalbleiter (51) den jeder Heizstufe zuzuführenden Strom einstellen.

## Claims

1. Control circuitry for a plurality of electrical consumers (52), in particular in a motor vehicle, with power semiconductors (51) assigned respectively to each consumer (52) for adjusting the current supplied to the consumer (52) and a control unit (μC) for activating the power semiconductors (51), comprising:

   a contact breaker element (54, 81, 82), which is arranged in each case in the power supply to a power semiconductor (51), and
   a short-circuit switch (70), which is connected to the plurality of power supplies to the power semiconductors (51) and depending on a short-circuit signal of the control unit (μC) causes an interruption of the contact breaker elements (54, 81, 82) via a short circuit,
   **characterized by**
   a monitoring device for detecting whether a power semiconductor (51) is supplying power to the respective consumer (52) and in that
   the short-circuit switch (70) is connected via respectively a cross web (85) connecting two adjacent power supplies to one another to the power supplies of the power semiconductors (51) and
   that the control unit (μC) causes an interruption of the plurality of the power supplies connected to the short-circuit switch (70) by activation of the short-circuit switch (70), if the monitoring device (μC) detects a power supply to one of the consumers (52) via a power semiconductor (51), the power supply of which is connected to the short-circuit switch (70), without any corresponding activation of the power semiconductor (51) by the control unit (μC) being present,
   the electrical resistances of the contact breaker elements (54, 81, 82) and of the at least one cross web (85) being rated such that a sufficiently high short-circuit current is applied respectively only at one of the contact breaker elements (54, 81, 82) at the same time and
   the contact breaker elements (54, 81, 82) disconnecting the plurality of power supplies to the power semiconductors (51) consecutively in each case on activation of the short-circuit switch (70).

2. Control circuitry according to claim 1, the monitoring device being integrated into the power semiconductor (51).

3. Control circuitry according to claim 1 or 2, a contact breaker element (54) being arranged in a line section of the power supply to the respective power semiconductor (51) and the line section being designed such that a short-circuit current generated by the short-circuit switch (54) causes a line interruption.

4. Control circuitry according to claim 3, the line section (55) being a printed conductor section of the power supply.

5. Control circuitry according to claim 4, the cross-section of the printed conductor being dimensioned such that the printed conductor interrupts the power supply at a predetermined current value.

6. Control circuitry according to one of claims 1 to 5, the contact breaker elements (54) interrupting the power supplies to the power transistors (51) consecutively starting out from the contact breaker element (54) adjacent to the short-circuit switch (70).

7. Control circuitry according to one of claims 1 to 6, a cross web (85) respectively connecting the line sections between the contact breaker element (54) and the power semiconductor (51) of the power supplies to one another.

8. Control circuitry according to one of claims 1 to 7, the electrical resistance of a cross web (85) being greater than the electrical resistance of a contact breaker element (81, 82).

9. Control circuitry according to one of claims 1 to 8, the short-circuit switch (70) being connected to the power supplies to two power semiconductors (51) and interrupting both power supplies in the event of failure of one of the power semiconductors (51).

10. Control circuitry according to one of claims 1 to 9, the short-circuit switch (54) being a relay or a semiconductor switch, in particular an IGBT.

11. Control circuitry according to one of claims 1 to 10, the control unit (μC) being connected electrically to the load circuits of the power semiconductors (51) for automatic activation of the control unit (μC) in the event of failure of the power semiconductor (51) when the ignition of the motor vehicle is turned off.

12. Control circuitry according to one of claims 1 to 11, the control unit (μC) being activated at periodic intervals of time when the ignition of the motor vehicle is turned off.

13. Control circuitry according to one of claims 1 to 12, the control circuitry being used to activate PTC heating elements (52) as consumers in an electrical heating device for motor vehicles with a plurality of heating stages, the power semiconductors (51) adjusting the current to be supplied to each heating stage.

14. Method for safeguarding the activation of a plurality of electrical consumers (52), in particular in a motor vehicle, with power semiconductors (51) assigned respectively to each consumer (52) for adjusting the current supplied to the consumer (52), comprising:

activation of a short-circuit switch (70), which is connected to a plurality of power supplies to the power semiconductors (51), for interrupting the power supplies to the power semiconductors (51) connected to the short-circuit switch (70), a contact breaker element (54) being arranged in a line section of the power supply to the respective power semiconductor (51) and the line section being rated such that a short-circuit current generated by the short-circuit switch (54) causes a line interruption,
**characterized by**
monitoring of the supply of power by a power semiconductor (51) to the respective consumer (52) and in that
the plurality of power supplies to the power semiconductors (51) are disconnected consecutively in each case on activation of the short-circuit switch (70) if in the monitoring step a power supply to one of the consumers (52) via a power semiconductor (51) is detected, the power supply of which semiconductor is connected to the short-circuit switch (70), without any corresponding activation of the power semiconductor (51) being present, a short-circuit current sufficiently high for interruption flowing at the same time only through one of the power supplies in each case to interrupt the power supplies.

15. Method according to claim 14, the monitoring step being executed by the power semiconductor (51).

16. Method according to claim 14 or 15, the line section (55) being a printed conductor section of the power supply.

17. Method according to claim 16, the cross-section of the printed conductor being dimensioned such that the printed conductor interrupts the power supply at a predetermined current value.

18. Method according to one of claims 14 to 17, the power supplies to the power transistors (51) being interrupted consecutively starting out from the power supply adjacent to the short-circuit switch (70).

19. Method according to one of claims 14 to 18, the short-circuit switch (70) being connected to the power supplies of the power semiconductors (51) via respectively a cross web (85) connecting two adjacent power supplies to one another.

20. Method according to claim 19, a cross web (85) respectively connecting the line sections between the contact breaker element (54) and the power semiconductor (51) of the power supplies to one another.

21. Method according to claim 19 or 20, the electrical resistances of the contact breaker elements (81, 82) and the at least one cross web (85) being rated such that at the same time a sufficiently high short-circuit current flows only through one contact breaker element (81, 82) in each case.

22. Method according to one of claims 19 to 21, the electrical resistance of a cross web (85) being greater than the electrical resistance of a contact breaker element (81, 82).

23. Method according to one of claims 14 to 22, the short-circuit switch (70) being connected to the power supplies to two power semiconductors (51) and interrupting both power supplies in the event of failure of one of the power semiconductors (51).

24. Method according to one of claims 14 to 23, the short-circuit switch (54) being a relay or a semiconductor switch, in particular an IGBT.

25. Method according to one of claims 14 to 24, steps being executed for monitoring and interruption by a control unit ($\mu$C), which is connected electrically to the load circuits of the power semiconductors (51) for automatic activation of the control unit ($\mu$C) in the event of failure of the power semiconductor (51) when the ignition of the motor vehicle is turned off.

26. Method according to one of claims 14 to 25, the monitoring being activated at periodic intervals of time when the ignition of the motor vehicle is turned off.

27. Method according to one of claims 14 to 26, the method being used in the control circuitry of an electrical heating device for motor vehicles for activating PTC heating elements (52) as consumers in the electrical heating device with a plurality of heating stages, the power semiconductors (51) adjusting the current to be supplied to each heating stage.

**Revendications**

1. Circuit de commande pour une pluralité de charges (52) électriques, en particulier dans un véhicule automobile, comprenant respectivement un semi-conducteur de puissance (51) associé à chaque charge (52) pour le réglage du courant amené à la charge (52) et une unité de commande ($\mu$C) pour l'excitation des semi-conducteurs de puissance (51), comprenant :

un élément interrupteur (54, 81, 82), qui est disposé respectivement dans l'arrivée de courant à un semi-conducteur de puissance (51), et un commutateur à court-circuit (70), qui est relié à la pluralité d'arrivées de courant aux semi-conducteurs de puissance (51) et entraîne en fonction d'un signal de court-circuit de l'unité de commande. (μC) par un court-circuit une interruption des éléments interrupteurs (54, 81, 82),
**caractérisé par**
un dispositif de contrôle pour détecter si un semi-conducteur de puissance (51) amène du courant à la charge (52) concernée, et en ce que le commutateur à court-circuit (70) est relié par respectivement une barrette transversale (85) reliant entre elles deux arrivées de courant voisines aux arrivées de courant des semi-conducteurs de puissance (51) et
en ce que l'unité de commande (μC) ordonne une interruption de la pluralité des arrivées de courant reliées au commutateur à court-circuit (70) par l'activation du commutateur à court-circuit (70) lorsque le dispositif de contrôle (μC) constate une arrivée de courant à l'une des charges (52) au moyen d'un semi-conducteur de puissance (51), dont l'arrivée de courant est reliée au commutateur à court-circuit (70), sans qu'une excitation appropriée du semi-conducteur de puissance (51) par l'unité de contrôle (μC) soit effectuée,
dans lequel les résistances électriques des éléments interrupteurs (54, 81, 82) et de la au moins une barrette transversale (85) sont conçues de telle sorte qu'à chaque fois on ait en même temps un courant de court-circuit suffisamment élevé uniquement sur l'un des éléments interrupteurs (54, 81, 82), et
les éléments interrupteurs (54, 81, 82) séparent à chaque fois de façon consécutive la pluralité des arrivées de courant aux semi-conducteurs de puissance (51) lors de l'activation du commutateur à court-circuit (70).

2. Circuit de commande selon la revendication 1, dans lequel le dispositif de contrôle est intégré dans le semi-conducteur de puissance (51).

3. Circuit de commande selon la revendication 1 ou 2, dans lequel un élément interrupteur (54) est disposé dans une partie de ligne de l'arrivée de courant au semi-conducteur de puissance (51) concerné et la partie de ligne est conçue de telle sorte qu'un courant de court-circuit provoqué par le commutateur à court-circuit (54) entraîne une interruption de ligne.

4. Circuit de commande selon la revendication 3, dans lequel la partie de ligne (55) est une partie de piste conductrice de l'arrivée de courant.

5. Circuit de commande selon la revendication 4, dans lequel la section de la piste conductrice est dimensionnée de telle sorte que la piste conductrice interrompt l'arrivée de courant dans le cas d'une valeur de courant prédéfinie.

6. Circuit de commande selon l'une quelconque des revendications 1 à 5, dans lequel les éléments interrupteurs (54) interrompent de façon successive les arrivées de courant aux transistors de puissance (51) à partir de l'élément interrupteur (54) voisin du commutateur à court-circuit (70).

7. Circuit de commande selon l'une quelconque des revendications 1 à 6, dans lequel une barrette transversale (85) relie respectivement les parties de ligne entre l'élément interrupteur (54) et le semi-conducteur de puissance (51) des arrivées de courant.

8. Circuit de commande selon l'une quelconque des revendications 1 à 7, dans lequel la résistance électrique d'une barrette transversale (85) est supérieure à la résistance électrique d'un élément interrupteur (81, 82).

9. Circuit de commande selon l'une quelconque des revendications 1 à 8, dans lequel le commutateur à court-circuit (70) est relié avec les arrivées de courant à deux semi-conducteurs de puissance (51) et interrompt les deux arrivées de courant en cas de défaillance de l'un des semi-conducteurs de puissance (51) .

10. Circuit de commande selon l'une quelconque des revendications 1 à 9, dans lequel le commutateur à court-circuit (54) est un relais ou un commutateur à semi-conducteur, en particulier un IGBT.

11. Circuit de commande selon l'une quelconque des revendications 1 à 10, dans lequel l'unité de commande (μC) est reliée électriquement aux circuits de charge des semi-conducteurs de puissance (51) pour l'activation automatique de l'unité de commande (μC) en cas de défaillance du semi-conducteur de puissance (51) en cas d'allumage coupé du véhicule.

12. Circuit de commande selon l'une quelconque des revendications 1 à 11, dans lequel l'unité de commande (μC) est activée à des intervalles de temps périodiques en cas d'allumage coupé du véhicule.

13. Circuit de commande selon l'une quelconque des revendications 1 à 12, dans lequel le circuit de commande est utilisé pour l'excitation d'éléments de chauffage PTC (52) en tant que charge dans un dispositif de chauffage électrique pour des véhicules automobiles avec une pluralité de niveaux de chauffage, dans lequel les semi-conducteurs de puissance (51) règlent le courant à amener à chaque niveau du chauffage.

**14.** Procédé pour garantir l'excitation d'une pluralité de charges électriques (52), en particulier dans un véhicule automobile, avec respectivement un semi-conducteur de puissance (51) associé à chaque charge (52) pour le réglage du courant amené à la charge (52), comprenant :

l'activation d'un commutateur à court-circuit (70), qui est relié à la pluralité d'arrivées de courant aux semi-conducteurs de puissance (51), pour l'interruption des arrivées de courant aux semi-conducteurs de puissance (51) reliés au commutateur à court-circuit (70),

dans lequel un élément interrupteur (54) est disposé dans une partie de ligne de l'arrivée de courant au semi-conducteur de puissance (51) concerné et la partie de ligne est conçue de telle sorte qu'un court-circuit provoqué par le commutateur à court-circuit (54) entraîne une interruption de ligne,

**caractérisé par**

le contrôle de l'arrivée du courant d'un semi-conducteur de puissance (51) à la charge (52) concernée et par le fait que

la pluralité des arrivées de courant aux semi-conducteurs de puissance (51) sont séparées à chaque fois de façon successive lors de l'activation du commutateur à court-circuit (70) lorsque, dans l'étape de contrôle, une arrivée de courant à l'une des charges (52) par un semi-conducteur de puissance (51) est constatée, dont l'arrivée de courant est reliée au commutateur à court-circuit (70) sans qu'on ait une excitation appropriée du semi-conducteur de puissance (51), dans lequel un courant de court-circuit suffisamment élevé pour l'interruption circule simultanément à chaque fois seulement dans l'une des arrivées de courant pour l'interruption des arrivées de courant.

**15.** Procédé selon la revendication 14, dans lequel l'étape de contrôle est effectuée par le semi-conducteur de puissance (51).

**16.** Procédé selon la revendication 14 ou 15, dans lequel la partie de ligne (55) est une partie de piste conductrice de l'arrivée de courant.

**17.** Procédé selon la revendication 16, dans lequel la section de la piste conductrice est dimensionnée de telle sorte que la piste conductrice interrompt l'arrivée de courant dans le cas d'une valeur de courant prédéfinie.

**18.** Procédé selon l'une quelconque des revendications 14 à 17, dans lequel les arrivées de courant aux transistors de puissance (51) sont interrompues de façon successive à partir de l'arrivée de courant voisine du commutateur à court-circuit (70).

**19.** Procédé selon l'une quelconque des revendications 14 à 18, dans lequel le commutateur à court-circuit (70) est relié aux arrivées de courant des semi-conducteurs de puissance (51) au moyen de respectivement une barrette transversale (85) reliant entre elles deux arrivées de courant voisines.

**20.** Procédé selon la revendication 19, dans lequel une barrette transversale (85) relie chaque fois les parties de ligne entre l'élément interrupteur (54) et le semi-conducteur de puissance (51) des arrivées de courant.

**21.** Procédé selon la revendication 19 ou 20, dans lequel les résistances électriques des éléments interrupteurs (81, 82) et d'au moins une barrette transversale (85) sont conçues de telle sorte qu'un courant de court-circuit suffisamment élevé circule en même temps à chaque fois seulement dans un élément interrupteur (81, 82).

**22.** Procédé selon l'une quelconque des revendications 19 à 21, dans lequel la résistance électrique d'une barrette transversale (85) est supérieure à la résistance électrique d'un élément interrupteur (81, 82).

**23.** Procédé selon l'une quelconque des revendications 14 à 22, dans lequel le commutateur à court-circuit (70) est relié avec les arrivées de courant à deux semi-conducteurs de puissance (51) et interrompt les deux arrivées de courant en cas de défaillance de l'un des semi-conducteurs de puissance (51).

**24.** Procédé selon l'une quelconque des revendications 14 à 23, dans lequel le commutateur à court-circuit (54) est un relais ou un commutateur à semi-conducteur, en particulier un IGBT.

**25.** Procédé selon l'une quelconque des revendications 14 à 24, dans lequel des étapes pour le contrôle et l'interruption sont effectuées par une unité de commande ($\mu$C), qui est reliée électriquement aux circuits de charge des semi-conducteurs de puissance (51) pour l'activation automatique de l'unité de commande ($\mu$C) en cas de défaillance du semi-conducteur de puissance (51) en cas d'allumage coupé du véhicule.

**26.** Procédé selon l'une quelconque des revendications 14 à 25, dans lequel le contrôle est activé à des intervalles de temps périodiques en cas d'allumage coupé du véhicule.

**27.** Procédé selon l'une quelconque des revendications 14 à 26, dans lequel le procédé est utilisé dans le circuit de commande d'un dispositif de chauffage électrique pour véhicules automobiles pour l'excitation d'éléments de chauffage PTC (52) comme charge dans le dispositif de chauffage électrique avec une pluralité de niveaux de chauffage, dans lequel les semi-conducteurs de puissance (51) règlent le courant à amener à chaque niveau de chauffage.

# Fig. 1

# Fig. 2

Steuerungsanforderung

30

Steuereinheit

Funktionsüberwachung
(Stromfluß;
Spannung)

PWM-
Steuerung

Unterbrechungs-
Signal

31

34

33

35

32

Stromzuführung

32

# Fig. 3

Steuerungsanforderung

| Ansteuerung des Leistungshalbleiters | S1 |

| Erfassen der Funktion des Leistungshalbleiters | S2 |

| Feststellen, ob der Leistungs- halbleiter angesteuert ist | S3 |

| Unterbrechen der Stromzufuhr zu dem Leistungshalbleiter | S4 |

# Fig. 4

## Fig. 5

## Fig. 6

Fig. 7

Fig. 8

Fig. 9

Fig. 10a

Fig. 10b

Fig. 11

**Fig. 12**

**Fig. 13**

Fig. 14

**EP 1 630 923 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2396982 A